(19) Europäisches Patentamt
European Patent Office
Office européen des brevets

(11) EP 2 040 957 B1

(12) **EUROPÄISCHE PATENTSCHRIFT**

(45) Veröffentlichungstag und Bekanntmachung des Hinweises auf die Patenterteilung:
**07.10.2009 Patentblatt 2009/41**

(21) Anmeldenummer: **07765095.0**

(22) Anmeldetag: **05.07.2007**

(51) Int Cl.:
**B60R 21/01** (2006.01)

(86) Internationale Anmeldenummer:
**PCT/EP2007/005977**

(87) Internationale Veröffentlichungsnummer:
**WO 2008/006507 (17.01.2008 Gazette 2008/03)**

(54) **VERFAHREN UND VORRICHTUNG ZUR PLAUSIBILITÄTSKONTROLLE VON MESSWERTEN IM KRAFTFAHRZEUGUMFELD**

METHOD AND DEVICE FOR CHECKING THE PLAUSIBILITY OF MEASURED VALUES IN THE SURROUNDINGS OF A MOTOR VEHICLE

PROCÉDÉ ET DISPOSITIF DE CONTRÔLE DE PLAUSIBILITÉ DE VALEURS DE MESURE DANS L'ENVIRONNEMENT D'UN VÉHICULE À MOTEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.07.2006 DE 102006032727**

(43) Veröffentlichungstag der Anmeldung:
**01.04.2009 Patentblatt 2009/14**

(73) Patentinhaber: **Lucas Automotive GmbH**
**56070 Koblenz (DE)**

(72) Erfinder: **SCHMITT, Hubert**
**56299 Ochtendung (DE)**

(74) Vertreter: **Röthinger, Rainer**
**Wuesthoff & Wuesthoff**
**Patent- und Rechtsanwälte**
**Schweigerstrasse 2**
**81541 München (DE)**

(56) Entgegenhaltungen:
**EP-A2- 0 849 109**  **DE-A1- 10 218 645**
**DE-A1- 10 338 234**  **DE-A1- 19 525 217**
**DE-A1- 19 923 688**  **US-A1- 2005 159 869**

**Beschreibung**

**Gebiet der Erfindung**

Die Erfindung betrifft ein Verfahren zur Plausibilitätskontrolle von Messwerten. Genauer gesagt betrifft die Erfindung ein Verfahren zur Plausibilitätskontrolle von Messwerten derselben Messgröße, die von unsynchronisierten Sensoren in einem Kraftfahrzeug-Umfeld erzeugt werden.

**Hintergrund der Erfindung**

Bei der Erfassung und Verarbeitung von Messwerten in sicherheitsrelevanten Systemen werden Teilaufgaben üblicherweise redundant gelöst, um die Fehler- und Ausfallwahrscheinlichkeit des Gesamtsystems gering zu halten. Dies kann die Erfassung ein und derselben Messgröße durch mehrere gleichartige oder verschiedenartige Sensoren beinhalten. In der Regel geht man hierbei davon aus, dass die Wahrscheinlichkeit für einen Defekt einer einzelnen Komponente um ein Vielfaches größer ist als ein Defekt zweier parallel vorgesehener Komponenten zum gleichen Zeitpunkt.

Die Drehgeschwindigkeit eines Kraftfahrzeugs um seine Hochachse, die sogenannte Gierrate, kann beispielsweise von zwei Sensoren erfasst und an eine Verarbeitungseinheit weitergeleitet werden, die ihrerseits Teil eines Systems für automatische Lenkeingriffe zur Fahrzeugstabilisierung ist. Die Eingreifzeiten eines solchen Lenksystems sind sehr kurz, da ein fehlerhaft generiertes Lenkmoment sich schon innerhalb weniger Millisekunden (typischerweise 50 - 100 ms) sicherheitskritisch auswirken kann. In der Verarbeitungseinheit muss die Fehlfunktion eines der Sensoren daher sicher und schnell detektiert werden, um das automatische Lenksystem rechtzeitig abschalten und den Fahrer warnen zu können.

Dabei ist zu berücksichtigen, dass die Messzeitpunkte der Sensoren nicht notwendigerweise synchronisiert sind, und daher ein Vergleich der Werte nicht ohne Weiteres möglich ist. Bei der heute üblichen Übertragung der Messwerte über einen Bus mit Prioritätsarbitrierung ist darüber hinaus nicht garantiert, dass die Messwerte in der Reihenfolge bei der Verarbeitungseinheit eintreffen, in der sie erfasst wurden.

Im Stand der Technik bekannt sind Vorrichtungen, die zur Fehlererkennung die zeitliche Änderung von Messwerten verwenden. Eine solche Vorrichtung wird in der Patentanmeldung DE 199 23 688 A1 beschrieben. Ein Fehlerzustand wird dann angenommen, wenn die Signaländerungen der Sensoren nicht miteinander korrelieren. Die beschriebene Vorrichtung ist nicht ausgebildet, Messwerte zu verarbeiten, die sich auf unterschiedliche Messzeitpunkte beziehen.

Die Patentanmeldung DE 195 25 217 A1 betrifft ein Verfahren zur Auswertung von sicherheitskritischen Messgrößen mit Hilfe zweier unabhängiger Messkanäle, von denen ein Messkanal den gesamten Messbereich und der andere nur einen Teilmessbereich erfasst. Das beschriebene Verfahren ist aber ebenfalls nicht ausgebildet, Messwerte zu verarbeiten, die sich auf unterschiedliche Messzeitpunkte beziehen.

Die US 2005/0159869A beschreibt Zeitstempel bei Messwerten. Der Erfindung liegt daher die Aufgabe zu Grunde, die Plausibilität von nicht synchronisierten Messwerten wenigstens zweier Sensoren derselben Messgröße im Kraftfahrzeug-Umfeld zu bestimmen.

**Kurzer Abriss der Erfindung**

Gemäß einem ersten Aspekt wird diese Aufgabe gelöst, indem jedem Messwert ein Zeitstempel zugeordnet wird; aus den physikalischen Eigenschaften des Kraftfahrzeugs ein Plausibilitätsfenster abgeleitet wird; geprüft wird, ob sich ein erster Messwert eines ersten Sensors und ein zeitlich späterer zweiter Messwert eines zweiten Sensors um mehr als durch das Plausibilitätsfenster bestimmt unterscheiden; und in Abhängigkeit von einem Ergebnis der Prüfung ein Plausibilitätssignal ausgegeben wird. Dabei geht der zeitliche Abstand des ersten Messwerts zum zweiten Messwert in die Bestimmung des Plausibilitätsfensters ein. Beispielsweise kann bei zeitlich weit auseinander liegenden Messwerten das Plausibilitätsfenster größer sein als bei rasch aufeinander folgenden Messwerten.

Bei der Messgröße kann es sich um eine Gierrate des Kraftfahrzeugs handeln. Die Erfindung ist jedoch nicht hierauf beschränkt; prinzipbedingt kann mit der Erfindung jede Art von diskreten Messwerten, die von wenigstens zwei Sensoren fortlaufend zur Verfügung gestellt werden, auf Plausibilität überprüft werden.

Die Erfindung kann beispielsweise bei einem System für automatische Lenkeingriffe zum Einsatz gelangen. In diesem Fall kann eine maximale durch einen Lenkeinschlag kontrollierbare Gierrate zur Bestimmung des Plausibilitätsfensters verwendet werden. Eine andere physikalische Eigenschaft des Kraftfahrzeugs, aufgrund derer das Plausibilitätsfenster gebildet werden kann, ist die maximale physikalisch mögliche Änderung der Gierrate innerhalb einer vorgegebenen Zeitspanne.

Die genannte Prüfung kann den Schritt der absoluten Differenzbildung zwischen dem ersten und dem zweiten Messwert beinhalten. Diese Differenz wird dann mit dem Plausibilitätsfenster verglichen. Bei einer anderen Ausführung kann zunächst das Plausibilitätsfenster auf Basis des zeitlich ersten Messwertes bestimmt werden und anschließend die Lage des zeitlich zweiten Messwert in diesem Plausibilitätsfenster geprüft werden.

Das Plausibilitätsfenster kann über eine obere und eine untere Grenze verfügen, welche unabhängig voneinander bestimmt werden können. Die Lage des Plausibilitätsfensters gegenüber dem zeitlich ersten Messwert kann somit an die Umstände anpassbar und erforderlichenfalls asymmetrisch bezüglich des ersten Messwerts sein.

In die Bestimmung des Plausibilitätsfensters kann auch eine Änderungsrate der Messwerte des ersten Sensors und/oder des zweiten Sensors eingehen. Durch die Einbeziehung der Änderung einer Messgröße kann das Plausibilitätsfenster gezielter bestimmt werden und so ein aussagekräftigeres Plausibilitätssignal bereitgestellt werden.

Weiter können Informationen über den Betriebszustand des Kraftfahrzeugs in die Bestimmung des Plausibilitätsfensters eingehen. Beispielsweise kann bei einer hohen Fahrzeuggeschwindigkeit die maximal plausible Gierrate geringer liegen als bei einer geringeren Fahrzeuggeschwindigkeit.

Es können Historien der Messwerte des ersten und/oder zweiten Sensors über einen vorbestimmten Zeitraum hinweg gespeichert werden, wobei auch die Historien in die Bestimmung des Plausibilitätsfensters eingehen können. Gegebenenfalls kann eine Extrapolation eines Messwertes aus einer gespeicherten Historie von Messwerten zur Bestimmung des Plausibilitätsfensters gebildet werden. Auch statistische Betrachtungen gespeicherter Historien sind möglich, um das Plausibilitätsfenster zu bestimmen.

Die Messwerte der wenigstens zwei Sensoren können auf einem gemultiplexten Bus übertragen werden. Es kann sich dabei beispielsweise um ein Zeitmultiplexverfahren handeln.

Bleibt einer der Messwerte über einen vorbestimmten Zeitraum hin aus, kann ein Fehlersignal ausgegeben werden. Das Fehlersignal kann dafür verwendet werden, dem Fahrer eines Kraftfahrzeugs eine Warnung zu geben. Ein sicherheitsrelevantes System, welches das bereitgestellte Plausibilitätssignal verwendet, kann mittels des Fehlersignals deaktiviert oder anderweitig in seiner Funktionsweise modifiziert werden.

Die Messhäufigkeit des ersten und/oder zweiten Sensors kann in Abhängigkeit von der Abweichung der Messwerte dieses Sensors von wenigstens einem Referenzwert variiert werden. Weichen die Messwerte eines oder mehrerer der Sensoren nur wenig von dem Referenzwert ab, kann beispielsweise die Messhäufigkeit gesenkt werden, um die Rechen- und Kommunikationsbelastung von verwendeten Fahrzeugsysteme zu verringern. Als Referenzwert kann einer der Messwerte herangezogen werden. Der Referenzwert kann aber auch vorbestimmt sein oder fortlaufend neu berechnet werden.

Neben dem Plausibilitätssignal können auch Messwerte ausgegeben werden, die aus den Messungen der Sensoren bestimmt werden und die zur Messgröße proportional sind. Bei einer Ausführung wird ein Signal bereitgestellt, welches aus den redundanten Messungen der zwei Sensoren bestimmt wird. Dieses Signal kann auch dann noch bereitgestellt werden, wenn nur noch ein Sensor Messwerte bereitstellt.

Die Häufigkeit der Messungen, die in die Plausibilitätsbestimmung eingehen, kann abhängig gemacht werden von der Abweichung der Messwerte dieses Sensors von den Referenzwerten. Beispielsweise kann bei nur geringen Abweichungen der Messwerte eines Sensors von den Referenzwerten die Messhäufigkeit dieses Sensors unverändert bleiben, während einige der Messwerte keinen Eingang in die Plausibilitätsbestimmung finden. Dies ist vorteilhaft, wenn die Menge an relevanter Information durch die Weglassung nicht oder tolerierbar geringfügig verringert wird, da dann mit geringerem Aufwand eine qualitativ vergleichbare Bestimmung durchgeführt werden kann.

Die Messwerte eines der Sensoren können als Referenzmesswerte verwendet werden Historien der Messwerte mindestens eines der Sensoren können gespeichert werden und aus diesen Historien kann derjenige Messwert bestimmt und ausgegeben werden, der am wenigsten von den Referenzwerten abweicht. Eine Mittelwertbildung von mehreren Sensorsignalen würde einen eventuellen Messfehler eines der Sensoren nur verringern, nicht aber vermeiden. Durch die Ausgabe des jeweils referenzmessungsnächsten Messwertes wird dieser Nachteil vermieden.

Wie bereits erwähnt, können die Messwerte eines der Sensoren als Referenzwerte verwendet werden. Die Referenzwerte können aber auch als Resultat einer anderen Bestimmung vorliegen. Insbesondere kann ein anderes System, welches gegebenenfalls selbst über eine Anzahl Sensoren verfügt, die Referenzwerte bereitstellen.

Gemäß einem weiteren Aspekt wird die eingangs genannte Aufgabe durch eine Vorrichtung gemäß Anspruch 11 gelöst, die eine Eingabeschnittstelle für den Empfang von Messwerten der wenigstens zwei Sensoren umfasst, wobei jedem Messwert ein Zeitstempel zugeordnet ist. Ferner verfügt die Vorrichtung über eine Verarbeitungseinheit, welche in der Lage ist, zu prüfen, ob sich ein erster Messwert eines ersten Sensors von einem zweiten Messwert eines zweiten Sensors um mehr unterscheidet, als es ein Plausibilitätsfenster vorgibt. Das Plausibilitätsfenster ist hierfür aus den physikalischen Eigenschaften eines Kraftfahrzeugs abgeleitet. Je nach Ergebnis dieser Prüfung kann die Verarbeitungseinheit ein Plausibilitätssignal ausgeben. Außerdem verfügt die Vorrichtung vorzugsweise über eine Ausgabeschnittstelle, über die dieses Plausibilitätssignal ausgegeben werden kann.

Die Sensoren, deren Messwerte die Vorrichtung verwendet, können Gierratensensoren sein. Die Sensoren können gleichen oder unterschiedlichen Typs sein und eng benachbart oder an voneinander entfernten Stellen des Kraftfahrzeugs untergebracht sein. Als vorteilhaft hat sich eine Anordnung der Sensoren in der Nähe der geometrischen Mitte des Kraftfahrzeugs parallel zur Hochachse erwiesen.

Für jeden Sensor Kann ein Speicher oder Speicherbereich vorgesehen sein, in welchem Messwerte der Sensoren abgelegt werden können. Das Fassungsvermögen dieser Speicher kann bei einer Ausführung für alle Sensoren gleich groß sein. Jeder Speicher kann als Ringspeicher aufgebaut sein und zyklisch beschrieben werden.

Ferner kann die Vorrichtung über eine weitere Ausgabeschnittstelle verfügen, über die sie ein zur Messgröße proportionales Ausgabesignal ausgeben kann, welches sie aus den Messwerten der Sensoren bestimmt.

Sowohl das Ausgabesignal als auch das Plausibilitätssignal können auf dem gleichen gemultiplexten Bus übertragen werden wie die Messwerte eines Sensors. Die Verwendung des Control Area Network (CAN) Bus-Standards hierfür bildet ein mögliches Beispiel.

Mehrere Sensoren können sich einen gemultiplexten Bus teilen. An diesem Bus können noch weitere Geräte sendend und/oder empfangend angeschlossen sein. Der Bus kann seriell organisiert sein.

Gemäß einem weiteren Aspekt wird die Aufgabe durch ein Computerprogrammprodukt zur Durchführung der beschriebenen Schritte gelöst, wobei das Computerprogrammprodukt auf einer Verarbeitungseinheit abläuft.

## Kurze Beschreibungen der Zeichnungen

Weitere Einzelheiten und Vorteile der Erfindung ergeben sich aus der nachfolgenden Beschreibung eines bevorzugten Ausführungsbeispiels sowie aus den Figuren. Es zeigen:

Fig. 1     ein Blockdiagramm einer erfindungsgemäßen Vorrichtung;

Fig. 2     ein Ablaufdiagramm eines erfindungsgemäßen Verfahrens gemäß einem ersten Ausführungsbeispiel;

Fig. 3     ein Ablaufdiagramm eines erfindungsgemäßen Verfahrens gemäß einem zweiten Ausführungsbeispiel;

Fig. 4a    eine Darstellung der zeitlichen Abfolge von zwei Messwerten zweier Sensoren;

Fig. 4b    eine Darstellung eines Plausibilitätsfensters in Relation zu zwei Messwerten zweier Sensoren; und

Fig. 5     eine Darstellung der zeitlichen Abfolge von bei der Verarbeitungseinheit eintreffenden Messungen zweier Sensoren.

## Beschreibung eines bevorzugten Ausführungsbeispiels

Im Folgenden werden Ausführungsbeispiele eines Verfahrens und einer Vorrichtung zur Plausibilitätsprüfung von Messwerten beschrieben. Die beschriebene Vorrichtung empfängt Messwerte und stellt ein Plausibilitätssignal sowie optional ein Ausgabesignal bereit. Das Ausgabesignal kann auch anstelle des Plausibilitätssignals ausgegeben werden.

Als Konvention steht P für ein Plausibilitätsfenster, S für einen Sensor und M für einen Messwert. Ein tiefgestellter Index eines Bezeichners zeigt den Sensor an, auf den sich der Bezeichner bezieht. So ist $P_1$ das Plausibilitätsfenster, welches auf Basis des Messwertes des Sensors 1 bestimmt worden ist. $S_1$ bezeichnet den Sensor mit der Nummer 1, $M_1$ den Messwert des Sensors 1. Sind als Indizes Kleinbuchstaben (i, j) verwendet, so bezeichnen diese allgemein einen beliebigen der verwendeten Sensoren, wobei i und j unterschiedliche Nummern repräsentieren.

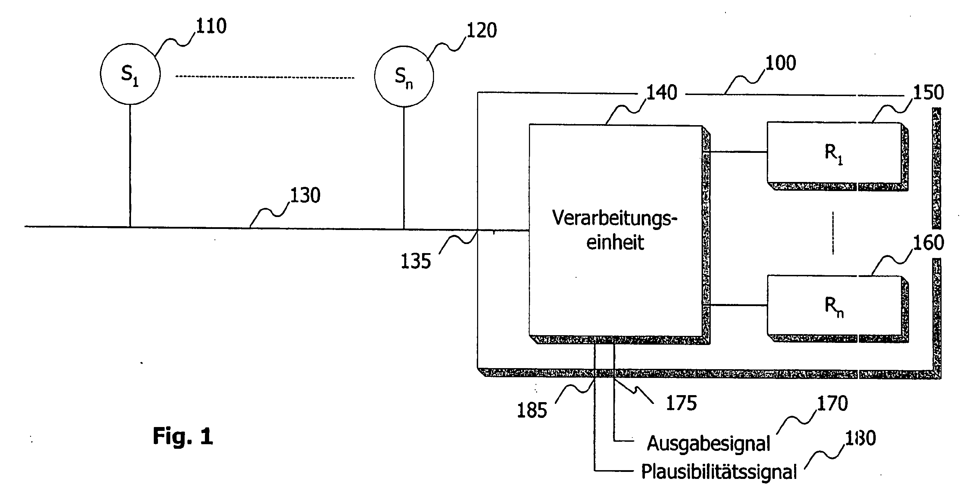

Fig. 1 zeigt im Blockschaltbild ein Ausführungsbeispiel einer Plausibilitätsvorrichtung 100. Die Sensoren $S_1$ 110 bis $S_n$ 120 führen Messungen derselben physikalischen Messgröße durch. Bei der Messgröße kann es sich um eine Bewegung eines Kraftfahrzeugs um seine Hochachse, die sogenannte Gierrate, handeln. Es werden wenigstens die beiden dargestellten Sensoren 110 und 120 verwendet, jedoch können beliebig viele weitere Sensoren der selben Messgröße verwendet werden. Die Sensoren 110, 120 sind nicht miteinander synchronisiert, und jeder Sensor nimmt regelmäßig Messungen vor, die er über einen Bus 130 zur Verfügung stellt. Die Messhäufigkeiten (Abtastraten) der einzelnen Sensoren 110, 120 können gleich sein, es können jedoch auch verschiedene Messhäufigkeiten für jeden Sensor oder für Gruppen von Sensoren verwendet werden. Weiter können die Messhäufigkeiten von weiteren Parametern hängen. Dabei kann es sich um lokale Parameter, wie die zuletzt gemessene Gierrate eines Sensors handeln, zusätzlich oder alternativ können auch an anderen Stellen erhobene Parameter, wie beispielsweise die Fahrzeuggeschwindigkeit, die Messhäufigkeit jedes Sensors beeinflussen.

Der Bus 130 transportiert die Signale jedes Sensors durch das Fahrzeug. Vorzugsweise wird ein einziger Bus 130 verwendet, um alle Sensoren 110, 120 miteinander und über eine Eingabeschnittstelle 135 mit einer Verarbeitungseinheit 140 zu verbinden. Es können jedoch auch mehrere Busse Verwendung finden. Insbesondere besteht die Möglichkeit, dass jeder Sensor 110, 120 über einen eigenen, ihm zugeordneten Bus 130 (nach Art einer herkömmlichen Verkabelung) mit der Verarbeitungseinheit 140 verbunden ist. Dabei kann es sich um analoge oder digitale Busse handeln, die beispielsweise nach dem Zeitschlitzverfahren arbeiten. Beliebige andere Übertragungsformen sind ebenfalls denkbar; beispielsweise könnten die Signale auch frequenzmoduliert auf einem entsprechenden Bus 130 übertragen werden. Eine bevorzugte Ausführungsform sieht die Verwendung des CAN-Busses vor. CAN-Busse werden seit vielen Jahren erfolgreich im Kraftfahrzeugumfeld zur Übertragung verschiedenster Daten verwendet.

Zur Abgrenzung sicherheitsrelevanter von weniger sicherheitsrelevanten Systemen werden zunehmend auch mehrere Busse in einem Fahrzeug verlegt. In Fall von mehreren zur Verfügung stehenden Busse können die Sensoren 110, 120 demselben oder verschiedenen Bussen zugeordnet werden. In der Regel wird sich eine Verwendung des sicherheitsrelevantesten CAN-Busses des Fahrzeugs anbieten.

Die beschriebene Vorrichtung 100 kann unbeschadet ihrer Funktionsweise an Bussen verwendet werden, die noch weitere Kommunikationsteilnehmer unterstützen. Es muss lediglich sicher gestellt werden, dass mit einer noch akzeptablen Häufigkeit Messwerte von wenigstens zwei Sensoren 110, 120 die Verarbeitungseinheit 140 erreichen. Zu diesem Zweck ist es vorteilhaft, einen Bus 130 vorzusehen, der die Priorisierung von Teilnehmern oder Nachrichten unterstützt. Der Umstand, dass bei einer Priorisierung weniger hoch privilegierte Nachrichten erst nach Abarbeitung der höher privilegierten Nachrichten übertragen werden, stellt keine Einschränkung für das beschriebene Verfahren dar; im Gegenteil behebt das Verfahren dieses Problem wie unten ausgeführt. Insbesondere ist das Verfahren in der Lage, Messwerte zu verarbeiten, die nicht in der gleichen Reihenfolge bei der Verarbeitungseinheit 140 eintreffen, wie sie von den Sensoren 110, 120 erhoben worden sind.

Jeder Sensor 110, 120 versieht jede seiner Messungen mit einem eindeutigen Zeitstempel. Eine Ausführungsform sieht vor, dass jeder Sensor 110, 120 über ein eigenes Zeitnormal verfügt, welches in regelmäßigen Abständen oder bedarfsgesteuert mit den Zeitnormalen der anderen Sensoren bzw. mit einem globalen Zeitnormal abgeglichen wird. Alternativ hierzu ist es möglich, dass in einer Kalibrierungsphase die Verarbeitungseinheit 140 den absoluten Versatz der Zeitnormale jedes Sensors bestimmt. Die Langzeitstabilität jedes Zeitnormals jedes Sensors 110, 120 sollte dann bekannt sein, um vor Erreichen einer gewählten Toleranzgrenze durch Auslösen einer Kalibrierungsphase ein Auseinanderdriften der verschiedenen Zeitnormale zu kompensieren.

Eine weitere Ausführungsform sieht vor, dass jeder Sensor 110, 120 in einer Kalibrierungsphase sein lokales Zeitnormal mit einem globalen Zeitnormal vergleicht und gegebenenfalls an dieses anpasst. Das globale Zeitnormal kann von der Verarbeitungseinheit 140 bereitgestellt werden.

Noch eine weitere Ausführungsform sieht vor, nur ein einziges zentrales Zeitnormal zu verwenden, welches jeder Sensor 110, 120 benutzt. Dies kann im Fall von Datenkollisionen auf einem Bus 130 oder Phasen hoher Auslastung des Busses 130 zu Abweichungen zwischen einem Messzeitpunkt und dem tatsächlich zugeordneten Zeitstempel führen, was aber zumeist toleriert werden kann. In der Regel ist der Auslastungsgrad des Busses 130 mit genügender Zuverlässigkeit gering genug, um die möglicherweise entstehenden Zeitdifferenzen vernachlässigbar klein zu halten.

Jeder Sensor 110, 120 kann seine erhobenen Messwerte selbständig auf dem Bus 130 übertragen; eine Übertragung und eventuell vorhergehende Erhebung eines Messwertes kann auch über eine über den Bus 130 übertragene Nachricht ausgelöst werden. Ist die Antwortzeit jedes Sensors 110, 120 bekannt oder lässt sie sich vorherbestimmen, so kann der Zeitstempel beispielsweise durch diejenige Komponente dem Messwert zugeordnet werden, die die Übertragung eines Messwertes angefordert hat. Diese anfordernde Komponente kann die Verarbeitungseinheit 140 sein.

Die Verarbeitungseinheit 140 verfügt gemäß dem in Fig. 1 dargestellten Ausführungsbeispiel über Speicher $R_1$ 150 bis $R_n$ 160, die jeweils den Sensoren $S_1$ 110 bis $S_n$ 120 zugeordnet sind. Jeder dieser Speicher 150 bis 160 enthält ein Anzahl Speicherplätze, von denen jeder einen Messwert und den dazugehörigen Zeitstempel aufzunehmen vermag. Jeder Speicher 150 bis 160 hat vorzugsweise die gleiche Anzahl Speicherstellen und wird zyklisch beschrieben. Das bedeutet, dass, nachdem so viele Messwerte und Zeitstempel abgelegt worden sind, wie Speicherplätze vorhanden sind, jeweils der nächste eintreffende Messwert nebst Zeitstempel auf dem Speicherplatz abgespeichert wird, welcher die älteste Messung des Speichers enthält. Bei den Speichern 150 bis 160 kann es sich auch um separate Speicherbereiche innerhalb eines einzigen physikalischen oder logischen Speichers handeln. Die Bandbreite, mit der die Verarbeitungseinheit 140 die Speicher 150 bis 160 ansprechen kann, sollte den Messhäufigkeiten und der Anzahl der verwendeten Sensoren unter den schlechtesten anzunehmenden Bedingungen Rechnung tragen. Der geometrischen Aufteilung der Sensoren 110, 120, der Verarbeitungseinheit 140 sowie der Speicher 150 bis 160 im Fahrzeug sind lediglich die Grenzen der verwendeten Übertragungssysteme zwischen den Elementen, wie beispielsweise einer maximalen Kabellänge, gesetzt.

Die Verarbeitungseinheit 140 stellt im Ausführungsbeispiel ein Ausgabesignal 170 über die Ausgabesignalschnittstelle 175 bereit, welches proportional zu der von den Sensoren erfassten Messgröße ist. Durch die unten beschriebene Verarbeitung und Plausibilitätsprüfung kann dieses Ausgabesignal 170 die Messwerte der als intakt erkannten Sensoren redundant enthalten und eignet sich so als Eingangsgröße für sicherheitsrelevante Verarbeitungssysteme.

Weiter stellt die Verarbeitungseinheit 140 aus den eingetroffenen Messwerten und den ihnen zugeordneten Zeitstempeln ein Plausibilitätssignal 180 (z.B. ein Fehlersignal, ein Warnsignal oder ein Abschaltsignal) über eine Plausibilitätssignalschnittstelle 185 nach außen bereit. Bei diesem Signal kann es sich beispielsweise um den logischen Pegel eines Anschlusses handeln; alternativ oder zusätzlich kann das Plausibilitätssignal 180 auf einem Bus verteilt werden. Andere Ausführungsformen, ein bereitgestelltes Plausibilitätssignal 180 umzusetzen, zu transportieren und zu nutzen, sind dem Fachmann wohlbekannt. Wird das Plausibilitätssignal 180 auf einem Bus ausgegeben, sieht eine bevorzugte Ausführungsform vor, hierfür einen der Busse 130 zu verwenden, über die bereits die Sensoren 110 bis 120 angeschlossen sind. Je nach Zweck des Signals sind jedoch auch andere Busse bzw. ein bauartähnlicher Bus in einer sicherheitstechnisch anderen Zone möglich. Das Plausibilitätssignal 180 kann auch mehrfach ausgegeben werden, beispielsweise durch eine entsprechende Nachricht auf einem CAN-Bus sowie dem Aktivieren einer Anzeigeeinrichtung, die den Kraftfahrzeugferiker über eine Änderung des Plausibilitätskriteriums informiert.

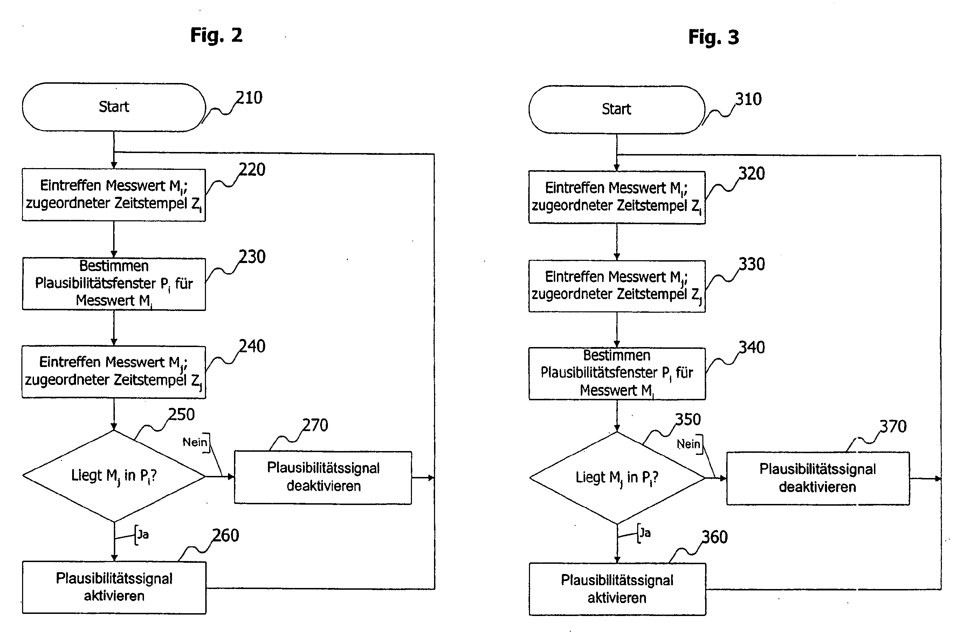

Fig. 2 zeigt ein Ablaufdiagramm eines Ausführungsbeispiels des Verfahrens. In Schritt 210 wird das Verfahren gestartet. Dies ist in der Regel beim Einschalten der elektrischen Verbraucher eines Kraftfahrzeugs der Fall, noch bevor der Motor gestartet wird. Eine eventuell erforderliche und oben ausgeführte Kalibrierungsphase ist in dieser Figur nicht ausgeführt. Je nach konkreter Implementierung und Häufigkeit einer solchen Kalibrierungsphase wird der Fachmann ohne Weiteres in der Lage sein, solche Phasen in das Ablaufdiagramm einzuflechten.

In Schritt 220 treffen von einem ersten Sensor der Messwert $M_i$ sowie der ihm zugeordnet Zeitstempel $Z_i$ ein. Verfügt die Verarbeitungseinheit 140 über Messwertspeicher 150 bis 160, so werden der eingetroffene Messwert $M_i$ und der ihm zugeordneten Zeitstempel $Z_i$ in dem Speicher abgelegt, der dem Sensor zugeordnet ist, von dem der Messwert $M_i$ stammt. In Schritt 230 wird auf Basis des Messwertes $M_i$ ein Plausibilitätsfenster $P_i$ bestimmt. In diese Bestimmung gehen physikalische Eigenschaften des Kraftfahrzeugs ein.

In Schritt 240 trifft von einem zweiten Sensor ein Messwert $M_j$ zusammen mit dem ihm zugeordneten Zeitstempel $Z_j$ ein. Verfügt die Verarbeitungseinheit 140 über Messwertspeicher 150 bis 160, so werden der eingetroffene Messwert $M_i$ und der ihm zugeordnete Zeitstempel $Z_j$ in dem Speicher abgelegt, der dem Sensor zugeordnet ist, von dem der Messwert $M_i$ stammt.

In Schritt 250 wird bestimmt, ob der Messwert $M_j$ im Plausibilitätsfenster $P_i$ liegt. Ist dies der Fall, so wird in Schritt 260 das Plausibilitätssignal 180 aktiviert. Andernfalls wird in Schritt 270 das Plausibilitätssignal 180 deaktiviert. In beiden Fällen kehrt das Verfahren wieder zum Ausgangspunkt zurück und erwartet einen weiteren Messwert nebst Zeitstempel in Schritt 220.

Bei jedem weiteren Durchlauf des Verfahren ist es möglich, den in Schritt 240 des vergangenen Durchlaufs erhaltenen Messwert $M_j$ nebst Zeitstempel $Z_j$ im aktuellen Durchlauf in Schritt 220 als Messwert $M_i$ mit Zeitstempel $Z_i$ ein weiteres Mal zu verwenden. Es ist anzumerken, dass die Messwerte $M_i$ und Zeitstempel $Z_j$ in Schritt 220 von einem anderen Sensor stammen, als die Messwerte $M_j$ und Zeitstempel $Z_i$ in Schritt 240.

Fig. 3 zeigt eine Variante des Ablaufdiagramms von Fig. 2. Der wesentliche Unterschied besteht darin, dass in Fig. 3 nach dem Eintreffen des Messwertes $M_i$ sowie des zugeordneten Zeitstempels $Z_i$ in Schritt 320 zunächst das Eintreffen des Messwertes $M_j$ mit dem zugeordneten Zeitstempel $Z_j$ in Schritt 330 folgt, bevor in Schritt 340 das Plausibilitätsfenster $P_i$ für den Messwert $M_i$ bestimmt wird. Auf diese Weise liegen die Informationen des Messwertes $M_j$ und des Zeitstempels $Z_j$ bereits vor, bevor das Plausibilitätsfenster $P_i$ gebildet wird. So ist es möglich, beide Messwerte $M_i$, $M_j$ und/oder beide Zeitstempel $Z_i$, $Z_j$ in die Bestimmung des Plausibilitätsfensters $P_i$ einzubringen oder die Differenz der Messwerte $M_i$, $M_j$ zu bilden und mit einem z. B. fest vorgegebenen (ausgelesenen) oder variablen (berechneten) Plausibilitätsfenster zu vergleichen.

Auch bei dieser Variante ist es möglich, nach einem ersten Durchlauf der Schritte 320 bis 350 sowie 360 oder 370 in Schritt 320 für den Messwert $M_i$ und den Zeitstempel $Z_i$ den Messwert $M_j$ und den Zeitstempel $Z_j$ des Schrittes 330 aus dem vorangegangenen Durchlauf zu verwenden. Die Einschränkung, dass die Messwerte und Zeitstempel in den Schritten 320 und 330 nicht von dem gleichen Sensor herrühren dürfen, bleibt bestehen.

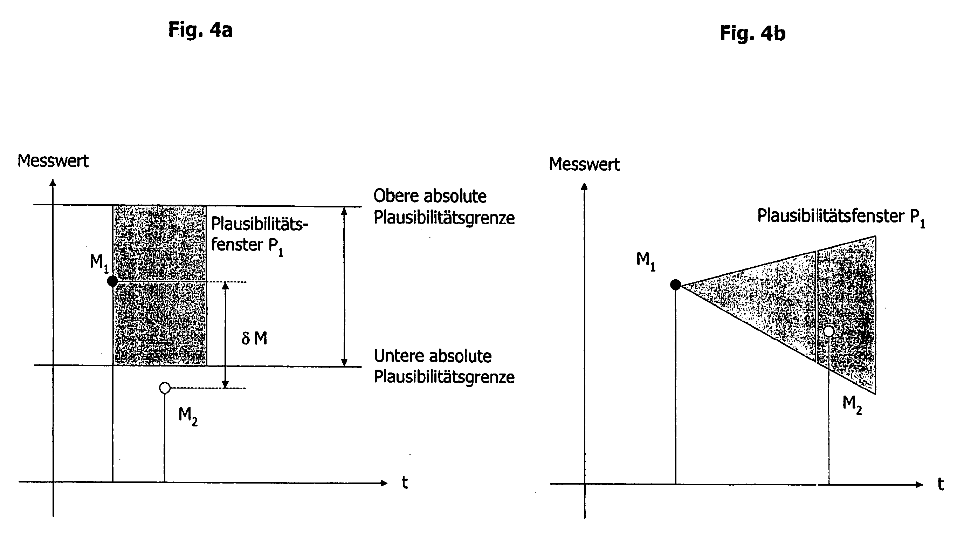

Fig. 4a zeigt ein Schema möglicher Relationen zweier Messwerte verschiedener Sensoren im zeitlichen Ablauf. Auf der Abszisse ist von links nach rechts die ablaufende Zeit dargestellt; die Ordinate zeigt den Absolutbetrag eines Messwertes an. Messwert $M_1$ eines ersten Sensors ist der zeitlich zuerst erhobene; auf ihn folgt Messwert $M_2$ eines zweiten Sensors. Das grau hinterlegte Rechteck bezeichnet das Plausibilitätsfenster $P_1$. Der Index des Plausibilitätsfensters gibt an, auf welchen Messwert welches Sensors sich das Fenster bezieht. Ein zeitlich darauf folgender Messwert, dessen Plausibilität geprüft wird, muss hier von einem anderen Sensor stammen.

In die Bestimmung eines Plausibilitätsfensters $P_1$ für Messwert $M_1$ können beispielsweise die dargestellten absoluten Plausibilitätsgrenzen eingehen. Wie dargestellt, kann das Plausibilitätsfenster $P_i$ allein aufgrund dieser oberen und unteren Grenze gebildet werden. Die absoluten Plausibilitätsgrenzen stellen im Fall einer gemessenen Gierrate die maximal bzw. minimal plausiblen Werte einer Fahrzeug-Drehgeschwindigkeit um die Hochachse dar. Beispielsweise ist davon auszugehen, das bei Verwendung des Plausibilitätssignals für ein System zur Stabilisierung des Fahrzustandes (AFS: Active Front Steering) mittels automatischer Lenkeinschläge eine Gierrate von vielen hundert Grad pro Sekunde entweder auf einem Mess- bzw. Verarbeitungsfehler basiert oder die Gierrate tatsächlich so hoch und ein Stabilisierungsversuch durch Lenkeinschlag aussichtslos ist. In beiden Fällen ist eine Deaktivierung des AFS-Systems indiziert, was durch Auswertung des inaktivierten Plausibilitätssignals veranlasst werden kann. Weitere Größen, die in die Bestimmung eines Plausibilitätsfensters eingehen können, beinhalten die Fahrzeuggeschwindigkeit und der Einschlagwinkel der Lenkung. Ist beispielsweise bekannt, dass sich das Fahrzeug in Vorwärtsfahrt befindet, und ist der Einschlagwinkel der Lenkung ungleich Null, so kann ein minimaler plausibler Gierratenwert bestimmt werden, dessen Unterschreitung auf einen Mess- oder Verarbeitungsfehler oder ungenügende Bodenhaftung zumindest einiger Räder hinweist.

Fig. 4b zeigt weitere Variationen bei der Bestimmung eines Plausibilitätsfensters in einem der Fig. 4a entsprechenden Koordinatensystem. Auch hier ist Messwert $M_1$ (erster Sensor) zeitlich vor Messwert $M_2$ (zweiter Sensor) erhoben. Wie durch das grau hinterlegte Dreieck angedeutet, kann ein Plausibilitätsfenster gebildet werden, welches vom zeitlichen Abstand der beiden Messwerte zueinander abhängt. Dicht aufeinander folgende Messwerte dürfen sich demnach nur um ein Weniges unterscheiden, um als plausibel anerkannt zu werden. Liegen die Werte zeitlich weiter auseinander, ist das Plausibilitätsfenster an dieser Stelle größer, und größere Abweichungen zwischen den absoluten Messwerten gelten noch als plausibel. Diese Heuristik ist a priori auf Basis der physikalischen Fahrzeugeigenschaften erstellt.

Auch die absolute Differenz zwischen den beiden dargestellten Messwerten kann in das Plausibilitätsfenster einfließen. Wie durch das grau hinterlegte Dreieck angedeutet, kann eine tolerierte Änderung in Richtung eines größeren Messwertes beispielsweise im geringerem Maße noch als plausibel anerkannt werden, als eine Abweichung in Richtung eines kleineren Messwertes $M_2$. Für den symmetrischen Fall, in welchem die tolerierte Abweichung des Messwertes $M_2$ vom Messwert $M_1$ in positiver Richtung so groß ist wie in negativer Richtung, kann allgemein ausgedrückt werden:

$$P_{1max} - P_{1min} \geq |M_1 - M_2|;$$

wobei $P_{1max}$ und $P_{1min}$ die obere und die untere Grenze Plausibilitätsfensters bezeichnen, das auf Basis des zeitlich ersten Wertes des Sensors 1 bestimmt wurde. Im allgemeinen Fall, wenn die tolerierten Schwellen in positiver und negativer Richtung unabhängig voneinander sind, gilt folgende Darstellung:

$$M_1 - P_{1min} \leq M_2 \leq M_1 + P_{1max}.$$

Werden die Messwerte $M_1$ und $M_2$ zu ein und demselben Zeitpunkt erhoben, oder liegen sie vernachlässigbar gering zeitlich auseinander, so sind die absoluten Messwerte direkt miteinander vergleichbar. Gemäß der Problemstellung für diese Erfindung ist dies ein Sonderfall, der die Allgemeinheit der nicht synchronisierten Messwerte nicht beschränkt. Im Idealfall werden die Messungen der verschiedenen Sensoren gleichverteilt über die Zeit erhoben und kommen mit tolerierbarer Verzögerung bei der Verarbeitungseinheit 140 an, so dass sich keine längeren Zeitabschnitte ergeben, zu denen keine aktuellen Messwerte in der Verarbeitungseinheit 140 vorliegen.

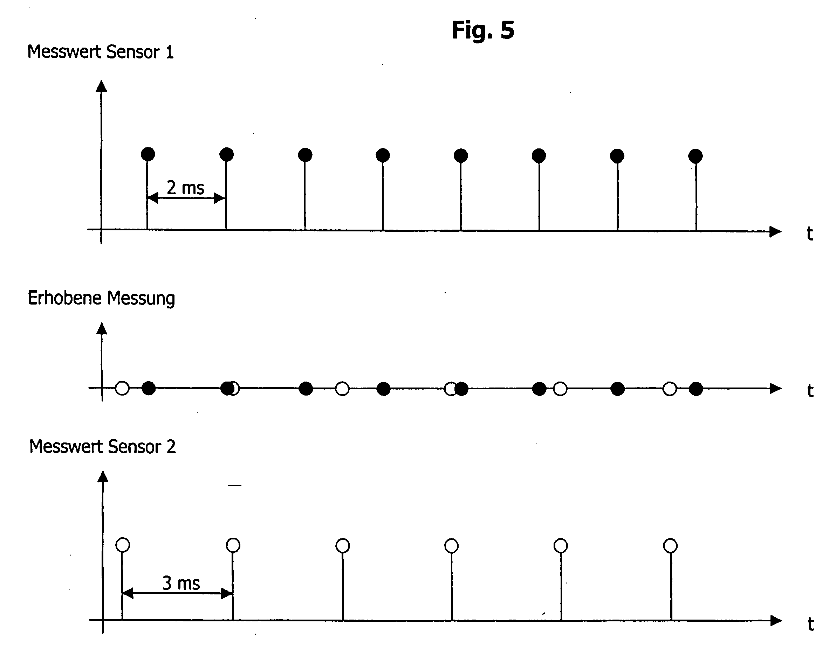

Fig. 5 stellt eine zeitliche Abfolge von an der Verarbeitungseinrichtung 140 eintreffenden Messungen zweier Sensoren dar. Oben in Fig. 5 sind die Messungen eines Sensors 1 dargestellt, wobei hier nur die Messzeitpunkte, nicht aber die Messwerte relevant sind. Unten in Fig. 5 sind in einer entsprechenden Darstellung die Messungen eines Sensors 2 dargestellt. Sensor 1 liefert alle 2 ms einen Messwert, während Sensor 2 nur alle 3 ms einen Messwert zur Verfügung stellt. Bereits die jeweils ersten Messungen der beiden Sensoren sind um einen Betrag gegeneinander verschoben, der keinem der beiden Messintervalle entspricht. Diese sind teilerfremd, daher liefern die Sensoren zu keinem Zeitpunkt beide einen Messwert.

Auf der mittleren Zeitachse sind die Zeitpunkte der eintreffenden Messwerte beider Sensoren überlagert dargestellt. Die von Sensor 1 stammenden Messwerte sind als schwarz gefüllte Kreise, die von Sensor 2 stammenden durch weiß gefüllte Kreise eingetragen. Es wird deutlich, wie unterschiedlich im mittleren Diagramm die Abstände zwischen den eintreffenden Messungen sind. Da die Messwerte der Sensoren immer unterschiedliche Messzeitpunkte aufweisen, ist eine direkte Vergleichbarkeit der Sensorwerte praktisch nie gegeben. Das beschriebene Verfahren kompensiert durch die Bildung von Plausibilitätsfenstern dieses Problem und gewährt eine Plausibilitätskontrolle von zeitlich dekorrelierten Messwerten.

Entsteht eine zuvor festgelegte Zeitspanne, in der kein Messsignal in der Verarbeitungseinheit 140 eintrifft, so kann die Verarbeitungseinheit 140 ein Fehlersignal ausgeben. Ebenso kann die Verarbeitungseinheit 140 einen Fehlerzustand eines einzelnen Sensors 110, 120 feststellen und anzeigen, wenn dieser Sensor 110, 120 über eine vorbestimmte Zeit hinweg keine Messwerte liefert.

Wenn die Verarbeitungseinheit 140 über Messwertspeicher 150 bis 160 verfügt, kann das Plausibilitätsfenster aufgrund von Betrachtungen der gespeicherten Informationen aussagekräftiger bestimmt werden. Beispielsweise kann ein Grad der Änderung eines Messwertes über eine Anzahl zurückliegender Messungen in die Bildung des Plausibilitätsfensters Eingang finden. Das in Fig. 4b angedeutete grau hinterlegte Plausibilitätsfenster kann durch die Einbeziehung weiterer Informationen bzw. physikalischer Eigenschaften des Kraftfahrzeugs nichtlineare Schenkel erhalten. Insbesondere können sich die obere und die untere Grenze des Plausibilitätsfensters über die Zeit exponential auseinander entwickeln, so dass sich statt eines Dreieckes beispielsweise die ungefähre Form einer Trompete ergibt.

Bereits vorliegende Erkenntnisse über die Abweichung verschiedener Messwerte von einander können Eingang finden in die Messhäufigkeit. Ein Sensor, dessen Messwerte sich nur noch knapp im Plausibilitätsfenster befinden, könnte beispielsweise öfter durch Plausibilitätsüberprüfungen überwacht werden. Eine Erhöhung der Prüfrate könnte durch Erhöhung der Messrate erzielt werden. Ist eine Variation der Messhäufigkeit dieses Sensors nicht möglich oder nicht erwünscht, könnte auch die Anzahl der Messwerte pro Zeiteinheit, die Eingang in das Verfahren finden, variiert werden.

Der Hauptbeweggrund für die Verwendung von mehr als einem Sensor zur Aufnahme von Messwerten einer physikalischen Größe besteht in der Vermeidung von automatischen Eingriffen in den Fahrzustand (z.B. Lenkeingriffe), die durch einen fehlerhaften Sensor hervorgerufen sind. Werden lediglich zwei Sensoren in einem System verwendet, so kann bei fehlerhaften Messungen eines Sensors nicht immer geschlussfolgert werden, welcher der beiden Sensoren noch funktionsfähig ist. Werden allgemein N Sensoren verwendet ($N \geq 2$), so kann eine Fehlfunktion von N - 1 Sensoren aufgrund der Plausibilitätsbestimmung diagnostiziert werden, und bei Ausfall von maximal N - 2 Sensoren kann auch mit hinreichender Wahrscheinlichkeit (siehe oben) bestimmt werden, welche Sensoren ausgefallen sind. Die Verwendung von redundanten Sensoren ist eine der Forderungen der IEC 61508 für SIL 3 Systeme (Safety Intequity Level 3). Dies trifft beispielsweise für AFS-Systeme zu. Eine bevorzugte Ausführungsform des Verfahrens beliefert ein solches AFS-System mit Gierraten-Daten.

Häufig ist es erwünscht, neben der Plausibilitätsinformation über eine Anzahl redundanter Sensoren ein Messgrößensignal bereitzustellen, welches sich auch im Fehlerfall ausschließlich auf die als funktionierend bekannten Sensoren stützt. Ein solches Signal wird erfindungsgemäß dadurch bereitgestellt, dass ein Referenzwert für die Messgröße bestimmt wird, und jeweils derjenige Messwert eines Sensors als Ausgabesignal 170 ausgegeben wird, der sich am wenigsten von dem Referenzsignal unterscheidet. Da sich die Messwerte eines ausgefallenen Sensors zwangsläufig markant von den als immer plausibel eingestuften Referenzmesswerten unterscheidet, kompromittieren die Messwerte ausgefallener Sensoren das Ausgabesignal 170 nicht. Eine Umschaltung zwischen den Sensoren ist nicht erforderlich. Nachdem keine Mittelwertbildung zwischen den Messwerten der Sensoren stattfindet, werden durch einen defekten Sensor eingestreute Fehler nicht nur gemildert, sondern durch das angegebene Verfahren getilgt. Temporär eingestreute Störungen auf einen der Sensoren, wie sie im Kraftfahrzeug-Umfeld häufig sind, werden effizient kompensiert. Werden die Messwerte eines Sensors zu einem späteren Zeitpunkt wieder als plausibel erachtet, so können die von diesem Sensor gelieferten Werte wieder dem ausgegebenen Messgrößensignal zu Grunde liegen. Die Referenzwerte können beispielsweise von einer anderen Fahrzeugkomponente wie einem ABS-Rechner bereitgestellt werden. Es kann auch einer der verwendeten Sensoren 110 bis 120 als Referenz-Sensor bestimmt sein.

## Patentansprüche

1. Verfahren zur Plausibilitätskontrolle der Messwerte mindestens zweier Sensoren (110, 120) für dieselbe Messgröße in einem Kraftfahrzeug-Umfeld, wobei jeder Sensor (110,120) fortlaufend Messwerte liefert, wobei

     - jedem Messwert $M_i$ ein Zeitstempel zugeordnet wird;
     - aus den physikalischen Eigenschaften des Kraftfahrzeugs ein Plausibilitätsfenster $P_i$ abgeleitet wird;
     - geprüft wird, ob sich ein erster Messwert $M_1$ eines ersten Sensors (110) und ein zeitlich späterer zweiter Messwert $M_2$ eines zweiten Sensors (120) um mehr als durch das Plausibilitätsfenster $P_i$ bestimmt unterscheiden, wobei der zeitliche Abstand des ersten Messwerts $M_1$ zum zweiten Messwert $M_2$ in die Bestimmung des Plausibilitätsfensters $P_i$ eingeht; und
     - in Abhängigkeit von einem Ergebnis der Prüfung ein Plausibilitätssignal erzeugt wird.

2. Verfahren nach Anspruch 1, **dadurch gekennzeichnet, dass** die Messgröße eine Gierrate des Kraftfahrzeugs ist, wobei zu den physikalischen Eigenschaften des Kraftfahrzeugs insbesondere eine physikalisch maximal mögliche oder eine maximale durch einen Lenkeinschlag kontrollierbare Gierrate gehört.

3. Verfahren nach Anspruch 1 oder 2, **dadurch gekennzeichnet, dass** die Prüfung den Vergleich einer absoluten Differenz zwischen dem ersten Messwert $M_1$ und dem zweiten Messwert $M_2$ mit dem Plausibilitätsfenster $P_i$ beinhaltet oder dass das Plausibilitätsfenster $P_i$ über eine obere und eine untere Grenze verfügt und beide Grenzen unabhängig von einander bestimmt werden.

4. Verfahren nach einem der vorangegangenen Ansprüche, **dadurch gekennzeichnet, dass** eine Änderungsrate der Messwerte des ersten Sensors (110) und/oderv zweiten Sensors (120) in die Bestimmung des Plausibilitätsfensters $P_i$ mit eingeht.

5. Verfahren nach einem der vorangegangenen Ansprüche, **dadurch gekennzeichnet, dass** Informationen über den Betriebszustand des Kraftfahrzeuges in die Bestimmung des Plausibilitätsfensters $P_i$ eingehen.

6. Verfahren nach einem der vorangegangenen Ansprüche, **dadurch gekennzeichnet, dass** über einen vorbestimmten Zeitraum hinweg eine Historie der ersten und/oder zweiten Messwerte gespeichert wird, und dass diese Historie in die Bestimmung des

Plausibilitätsfensters $P_i$ eingeht.

7. Verfahren nach einem der vorangegangenen Ansprüche, **dadurch gekennzeichnet, dass** die Messwerte der wenigstens zwei Sensoren (110, 120) auf einem gemultiplexten Bus (130) übertragen werden und/oder dass bei Ausbleiben eines Messwertes wenigstens eines der Sensoren (110, 120) über einen vorbestimmten Zeitraum ein Fehlersignal ausgegeben wird.

8. Verfahren nach einem der vorangegangenen Ansprüche, **dadurch gekennzeichnet, dass** die Messhäufigkeit des ersten und/oder zweiten Sensors (110, 120) abhängig ist von der Abweichung der Messwerte dieses Sensors (110, 120) von wenigstens einem Referenzwert.

9. Verfahren nach einem der vorangegangenen Ansprüche, **dadurch gekennzeichnet, dass** zusätzlich Messwerte ermittelt und ausgegeben werden, die aus den Messungen der Sensoren (110, 120) bestimmt werden und die zur Messgröße proportional sind und/oder dass die Häufigkeit der Messungen, die in die Plausibilitätsbestimmung eingehen, abhängig sind von der Abweichung der Messwerte dieses Sensors von Referenzwerten und/oder dass die Messwerte eines der Sensoren (110, 120) Referenzmesswerte sind, und dass aus den jüngsten Messwerten jedes Sensors derjenige bestimmt und ausgegeben wird, welcher am wenigsten von den Referenzwerten abweicht.

10. Verfahren nach einem der Ansprüche 7 bis 9, **dadurch gekennzeichnet, dass** die Messwerte eines der Sensoren (110, 120) als Referenzwerte hergenommen werden.

11. Vorrichtung zur Plausibilitätskontrolle der Messwerte $M_i$ mindestens zweier Sensoren (110, 120) für dieselbe Messgröße in einem Kraftfahrzeug-Umfeld, wobei jeder Sensor fortlaufend Messwerte liefert, wobei die Vorrichtung Folgendes umfasst:

   - wenigstens eine Eingabeschnittstelle (135) für den Empfang von Messwerten der wenigstens zwei Sensoren (110, 120), wobei jedem Messwert $M_i$ ein Zeitstempel zugeordnet ist oder wird;
   - eine Verarbeitungseinheit (140), die ausgebildet ist,

      i. zu prüfen, ob sich ein erster Messwert $M_1$ eines ersten Sensors (110) und ein zeitlich späterer zweiter Messwert $M_2$ eines zweiten Sensors (120) um mehr als durch ein Plausibilitätsfenster $P_i$ bestimmt unterscheiden, wobei das Plausibilitätsfenster $P_i$ aus den physikalischen Eigenschaften eines Kraftfahrzeugs abgeleitet ist und der zeitliche Abstand des ersten Messwerts $M_1$ zum zweiten Messwert $M_2$ in die Bestimmung des Plausibilitätsfensters $P_i$ eingeht; und

      ii. in Abhängigkeit vom einem Ergebnis der Prüfung ein Plausibilitätssignal zu erzeugen;

   - eine Ausgabeschnittstelle (185), über welche ein Plausibilitätssignal (180) ausgegeben wird;

12. Vorrichtung nach Anspruch 11, **dadurch gekennzeichnet, dass** die Sensoren (110, 120) Gierratensensoren sind und/oder dass für jeden Sensor ein Speicher oder Speicherbereich (150 bis 160) vorhanden ist.

13. Vorrichtung nach Anspruch 11 oder 12, **dadurch gekennzeichnet, dass** die Vorrichtung eine Ausgabeschnittstelle (175) umfasst, über die ein aus den Messwerten der Sensoren (110, 120) bestimmtes und zur Messgröße proportionales Ausgabesignal ausgegeben werden kann, wobei das Ausgabesignal und/oder das Plausibilitätssignal (180) insbesondere auf dem gleichen gemultiplexten Bus (130) übertragen wird wie die Messwerte wenigstens eines der Sensoren (110, 120).

14. Vorrichtung nach einem der Ansprüche 11 bis 13, **dadurch gekennzeichnet, dass** die Messwerte wenigstens zweier Sensoren (110, 120) über einen gemultiplexten Bus (130) zur Vorrichtung übertragen werden.

15. Computerprogrammprodukt mit Programmcodemitteln zur Durchführung eines Verfahrens nach einem der Ansprüche 1 bis 10, wenn das Computerprogrammprodukt auf einer Verarbeitungseinheit läuft.

**Claims**

1. Method of checking the plausibility of the measured values of at least two sensors (110, 120) for the same measured variable in a motor vehicle environment, each sensor (110, 120) supplying measured values continuously, comprising

   - assigning a time stamp to each measured value $M_i$;
   - deriving a plausibility window $P_i$ from the physical properties of the motor vehicle;
   - testing whether a first measured value $M_1$ of a first sensor (110) and a later second measured value $M_2$ of a second sensor (120) differ by more than is specified by the plausibility window $P_i$, the time interval between the first measured val-

ue $M_1$ and the second measured value $M_2$ entering the determination of the plausibility window $P_i$; and

    - depending on a result of the test, generating a plausibility signal.

2. Method according to Claim 1, **characterized in that** the measured variable is a yaw rate of the motor vehicle, wherein the physical properties of the motor vehicle particularly include a maximum physically possible yaw rate, or a maximum yaw rate which can be controlled by a steering angle.

3. Method according to claim 1 or 2, **characterized in that** the test includes comparing an absolute difference between the first measured value $M_1$ and the second measured value $M_2$ with the plausibility window $P_i$ or the plausibility window $P_i$ has an upper and a lower limit, and the two limits are determined independently of each other.

4. Method according to one of the preceding claims, **characterized in that** a rate of change of the measured values of the first sensor (110) and/or second sensor (120) enters the determination of the plausibility window $P_i$.

5. Method according to one of the preceding claims, **characterized in that** information about the operating state of the motor vehicle enters the determination of the plausibility window $P_i$.

6. Method according to one of the preceding claims, **characterized in that** a history of the first and/or second measured values over a predetermined period is stored, and that this history enters the determination of the plausibility window $P_i$.

7. Method according to one of the preceding claims, **characterized in that** the measured values of the at least two sensors (110, 120) are transmitted on a multiplexed bus (130), and/or that if a measured value of at least one of the sensors (110, 120) is absent for a predetermined period, a fault signal is output.

8. Method according to one of the preceding claims, **characterized in that** the measurement frequency of the first and/or second sensor (110, 120) depends on the difference of the measured values of this sensor (110, 120) from at least one reference value.

9. Method according to one of the preceding claims, **characterized in that** additionally measured values which are determined from the measurements of the sensors (110, 120), and are proportional to the measured variable, are determined and output, and/or that the frequency of the measurements which enter the plausibility determination depends on the difference of the measured values of this sensor from reference values, and/or that the measured values of one of the sensors (110, 120) are reference measured values, and that from the most recent measured values of each sensor, the one which differs least from the reference values is determined and output.

10. Method according to one of Claims 7 to 9, **characterized in that** the measured values of one of the sensors (110, 120) are taken as reference values.

11. Device for checking the plausibility of the measured values $M_i$ of at least two sensors (110, 120) for the same measured variable in a motor vehicle environment, each sensor supplying measured values continuously, wherein the device includes the following:

    - at least one input interface (135) for receiving measured values of the at least two sensors (110, 120), a time stamp being or becoming assigned to each measured value $M_i$;
    - a processing unit (140), which is designed

        i. to test whether a first measured value $M_1$ of a first sensor (110) differs from a later second measured value $M_2$ of a second sensor (120) by more than a plausibility window $P_i$, the plausibility window $P_i$ being derived from the physical properties of a motor vehicle, and the time interval between the first measured value $M_1$ and the second measured value $M_2$ entering the determination of the plausibility window $P_i$; and
        ii. depending on a result of the test, to generate a plausibility signal;

    - an output interface (185), via which a plausibility signal (180) is output.

12. Device according to Claim 11, **characterized in that** the sensors (110, 120) are yaw rate sensors, and/or that for each sensor, a memory or memory area (150 to 160) is present.

13. Device according to one of Claims 11 or 12, **characterized in that** the device includes an output interface (175), via which an output signal which is determined from the measured values of the sensors (110, 120), and which is proportional to the measured variable, can be output, wherein the output signal and/or the plausibility signal (180) are transmitted particularly on the same multiplexed bus (130) as the measured values of at least one of the sensors (110, 120).

14. Device according to one of Claims 11 to 13, **characterized in that** the measured values of at least two sensors (110, 120) are transmitted to the device via a multiplexed bus (130).

15. Computer program product with program code means for carrying out a method according to one of Claims 1 to 10, when the computer program product runs on a processing unit.

**Revendications**

1. Procédé de contrôle de plausibilité des valeurs de mesure au moins de deux capteurs (110, 120) pour la même grandeur de mesure dans l'environnement d'un véhicule à moteur, chacun des capteurs (110, 120) fournissant en continu des valeurs de mesure, dans le cadre duquel

   - un tampon horaire $M_1$ est associé à chaque valeur de mesure ;
   - une fenêtre de plausibilité $P_i$ est dérivée des propriétés physiques du véhicule à moteur ;
   - il est contrôlé si la différence entre une première valeur de mesure $M_1$ d'un premier capteur (110) et une seconde valeur de mesure ultérieure $M_2$ d'un second capteur (120) est supérieure à celle déterminée par la fenêtre de plausibilité $P_i$, le laps de temps entre la première valeur de mesure $M_1$ et la seconde valeur de mesure $M_2$ entrant dans la détermination de la fenêtre de plausibilité $P_i$ ; et
   - il est généré un signal de plausibilité en fonction d'un résultat du contrôle.

2. Procédé selon la revendication 1, **caractérisé en ce que** la grandeur de mesure est un taux de lacet du véhicule à moteur, un taux de lacet physiquement possible au maximum ou un taux de lacet maximal contrôlable par braquage du volant faisant partie des propriétés physiques du véhicule à moteur.

3. Procédé selon la revendication 1 ou 2, **caractérisé en ce que** le contrôle comprend la comparaison d'une différence absolue entre la première valeur de mesure $M_1$ et la seconde valeur de mesure $M_2$ à l'aide de la fenêtre de plausibilité $P_i$ ou **en ce que** la fenêtre de plausibilité $P_i$ dispose d'une limite supérieure et une limite inférieure et que ces deux limites peuvent être déterminées indépendamment l'une de l'autre.

4. Procédé selon l'une des revendications précédentes, **caractérisé en ce qu'**un taux de modification des valeurs de mesure du premier capteur (110) et/ou du second capteur (120) entre dans la détermination de la fenêtre de plausibilité $P_i$.

5. Procédé selon l'une des revendications précédentes, **caractérisé en ce que** des informations sur l'état de service du véhicule à moteur entrent dans la détermination de la fenêtre de plausibilité $P_i$.

6. Procédé selon l'une des revendications précédentes, **caractérisé en ce qu'**un historique des premières et/ou des secondes valeurs de mesure est mémorisé pendant un intervalle de temps prédéterminé et que cet historique entre dans la détermination de la fenêtre de plausibilité $P_i$.

7. Procédé selon l'une des revendications précédentes, **caractérisé en ce que** les valeurs de mesure d'au moins deux capteurs (110, 120) sont transmis via un bus multiplexé (130) et/ou **en ce qu'**un signal d'erreur est émis en cas d'absence d'une valeur de mesure d'au moins un des capteurs (110, 120) pendant un intervalle de temps prédéterminé.

8. Procédé selon l'une des revendications précédentes, **caractérisé en ce que** la fréquence de mesure du premier et/ou du second capteur (110, 120) dépend de ce que les valeurs de mesure de ce capteur (110, 120) divergent d'au moins une valeur de référence.

9. Procédé selon l'une des revendications précédentes, **caractérisé en ce qu'**il est déterminé et communiqué des valeurs de mesure supplémentaires lesquelles résultent des mesures des capteurs (110, 120) et sont proportionnelles à la grandeur de mesure et/ou **en ce que** la fréquence des mesures entrant dans la détermination de la fenêtre de plausibilité dépend de la divergence entre les valeurs de mesure de ce capteur et les valeurs de référence et/ou **en ce que** les valeurs de mesure d'un des capteurs (110, 120) sont des valeurs de mesure de référence, et que la valeur de mesure qui est déterminée et émise parmi les valeurs de mesure les plus récentes est celle qui diverge le moins des valeurs de référence.

10. Procédé selon l'une des revendications 7 à 9, **caractérisé en ce que** les valeurs de mesure d'un des capteurs (110, 120) sont utilisées comme valeurs de référence.

11. Dispositif de contrôle de plausibilité des valeurs de mesure $M_i$ au moins de deux capteurs (110, 120) pour la même grandeur de mesure dans l'environnement d'un véhicule à moteur, chacun des capteurs (110, 120) fournissant en continu des valeurs de mesure, ledit dispositif comportant ce qui suit :

   - au moins une interface d'entrée (135) pour la réception des valeurs de mesure d'au moins deux capteurs (110, 120), un tampon horaire allant être ou étant associé à chaque valeur de

mesure $M_i$ ;
- une unité de traitement (140) qui est conçue

    i. pour contrôler si la différence entre une première valeur de mesure $M_1$ d'un premier capteur (110) et une seconde valeur de mesure ultérieure $M_2$ d'un second capteur (120) est supérieure à celle déterminée par la fenêtre de plausibilité $P_i$, la fenêtre de plausibilité $P_i$ étant dérivée des propriétés physiques du véhicule à moteur et le laps de temps entre la première valeur de mesure $M_1$ et la seconde valeur de mesure $M_2$ entrant dans la détermination de la fenêtre de plausibilité $P_i$ ; et
    ii. pour générer un signal de plausibilité en fonction d'un résultat du contrôle ;

    - une interface de sortie (185) pour l'émission d'un signal de plausibilité (180).

**12.** Dispositif selon la revendication 11, **caractérisé en ce que** les capteurs (110, 120) sont des capteurs de taux de lacet et/ou **en ce qu'**il existe pour chaque capteur une mémoire ou une zone de mémoire (150 à 160).

**13.** Dispositif selon la revendication 11 ou 12, **caractérisé en ce que** le dispositif comporte une interface de sortie (175) par laquelle peut être émis un signal de sortie déterminé à partir des valeurs de mesure des capteurs (110, 120) et proportionnel à la grandeur de mesure, le signal de sortie et/ou le signal de plausibilité (180) étant plus particulièrement transmis sur le même bus (130) multiplexé que celui utilisé par les valeurs de mesure d'au moins un des capteurs (110, 120).

**14.** Dispositif selon l'une des revendications 11 à 13, **caractérisé en ce que** les valeurs de mesure d'au moins deux capteurs (110, 120) sont transmises au dispositif via un bus multiplexé (130).

**15.** Produit-programme d'ordinateur comportant des moyens de code de programme pour effectuer un procédé selon l'une des revendications 1 à 10, lorsque le produit-programme d'ordinateur tourne sur une unité de traitement.

**Fig. 1**

Ausgabesignal

Plausibilitätssignal

EP 2 040 957 B1

## Fig. 2

```
            ┌─────────────┐
            │    Start    │ ⟋210
            └──────┬──────┘
                   │
        ┌──────────▼──────────┐
        │ Eintreffen Messwert M_i; │ ⟋220
        │ zugeordneter Zeitstempel Z_i │
        └──────────┬──────────┘
                   │
        ┌──────────▼──────────┐
        │     Bestimmen       │ ⟋230
        │ Plausibilitätsfenster P_i für │
        │     Messwert M_i    │
        └──────────┬──────────┘
                   │
        ┌──────────▼──────────┐
        │ Eintreffen Messwert M_j; │ ⟋240
        │ zugeordneter Zeitstempel Z_j │
        └──────────┬──────────┘
                   │
              ◇ 250          ┌──────────────┐ 270
         Liegt M_j in P_i? ──Nein──▶│ Plausibilitätssignal │
                   │              │  deaktivieren │
                  Ja              └──────────────┘
                   │ 260
        ┌──────────▼──────────┐
        │  Plausibilitätssignal │
        │     aktivieren      │
        └─────────────────────┘
```

## Fig. 3

```
            ┌─────────────┐
            │    Start    │ ⟋310
            └──────┬──────┘
                   │
        ┌──────────▼──────────┐
        │ Eintreffen Messwert M_i; │ ⟋320
        │ zugeordneter Zeitstempel Z_i │
        └──────────┬──────────┘
                   │
        ┌──────────▼──────────┐
        │ Eintreffen Messwert M_j; │ ⟋330
        │ zugeordneter Zeitstempel Z_j │
        └──────────┬──────────┘
                   │
        ┌──────────▼──────────┐
        │     Bestimmen       │ ⟋340
        │ Plausibilitätsfenster P_i für │
        │     Messwert M_i    │
        └──────────┬──────────┘
                   │
              ◇ 350          ┌──────────────┐ 370
         Liegt M_j in P_i? ──Nein──▶│ Plausibilitätssignal │
                   │              │  deaktivieren │
                  Ja              └──────────────┘
                   │ 360
        ┌──────────▼──────────┐
        │  Plausibilitätssignal │
        │     aktivieren      │
        └─────────────────────┘
```

EP 2 040 957 B1

**Fig. 4a**

**Fig. 4b**

Messwert

Obere absolute
Plausibilitätsgrenze

Plausibilitätsfenster $P_1$

$M_1$

$\delta M$

Untere absolute
Plausibilitätsgrenze

$M_2$

t

Messwert

Plausibilitätsfenster $P_1$

$M_1$

$M_2$

t

EP 2 040 957 B1

**Fig. 5**

Messwert Sensor 1

2 ms

t

Erhobene Messung

t

Messwert Sensor 2

3 ms

t

EP 2 040 957 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19923688 A1
- DE 19525217 A1
- US 20050159869 A